# EUROPÄISCHE PATENTSCHRIFT

(11) **EP 1 287 732 B1**
(45) Veröffentlichungstag und Bekanntmachung des Hinweises auf die Patenterteilung: **13.12.2006**
(21) Anmeldenummer: 02016450.5
(22) Anmeldetag: 23.07.2002
(51) Int. Cl.: A01D 45/02

(54) **Erntevorsatz**
Harvester head
Tête de récolte

(30) Priorität: 01.09.2001 DE 10142978
(43) Veröffentlichungstag der Anmeldung: 05.03.2003
(73) Patentinhaber: Maschinenfabrik Kemper GmbH & Co. KG, 48703 Stadtlohn (DE)
(72) Erfinder: Wübbels, Richard, 46414 Rhede (DE); Wolters, Norbert, 48712 Gescher (DE)
(74) Vertreter: Holst, Sönke

(56) Entgegenhaltungen:
- EP-A- 0 471 961
- EP-A- 0 491 405
- EP-A- 0 553 506
- CH-A- 440 802
- DE-C- 3 828 293
- US-A- 2 636 331
- US-A- 4 446 682
- US-A- 5 329 753

## Beschreibung

Die Erfindung betrifft einen Erntevorsatz für eine selbstfahrende Erntemaschine, mit mehreren Erntegutaufnahme- und/oder Erntegutbearbeitungseinrichtungen, die in einer Vorwärtsbewegungsrichtung über ein Feld bewegbar sind, von denen mindestens eine an einem Mittelteil des Erntevorsatzes und jeweils mindestens eine an einem von zwei in der Betriebsstellung bezüglich der Vorwärtsbewegungsrichtung beidseits neben dem Mittelteil angeordneten Seitenteilen des Erntevorsatzes befestigt sind, wobei die Seitenteile durch Verschwenken um eine sich zumindest etwa in Vorwärtsbewegungsrichtung erstreckende Seitenteilschwenkachse zwischen einer Betriebsstellung und einer Transportstellung bewegbar sind, in der sie oberhalb des Mittelteils angeordnet sind.

Während von der Landmaschinenindustrie derzeit immer breitere Erntevorsätze für selbstfahrende Erntemaschinen angeboten werden, die es dem Landwirt ermöglichen, ein Feld in kürzerer Zeit und mit weniger Überfahrungen abzuernten, ist die maximale Breite von Fahrzeugen beim Befahren einer Straße gesetzlich beschränkt. Die Erntevorsätze werden deshalb in der Regel auf einem Anhänger transportiert oder in eine Transportstellung eingeklappt, in der ihre Breite gegenüber ihrer Betriebsposition vermindert ist. Das Einklappen hat den Vorteil, dass ein Abnehmen und Wiederanbringen des Erntevorsatzes von bzw. an der Erntemaschine entfällt.

In der DE 41 31 491 A wird ein Maiserntegerät für Feldhäcksler beschrieben, bei dem die Außenteile um horizontale, in Fahrtrichtung verlaufende Achsen hochklappbar sind und in der Transportstellung über den Mittelteil des Maiserntegeräts gelegt werden. Dieses Konzept findet sich relativ häufig, z. B. auch in der EP 0 553 506 A und EP 0 491 405 A für Schneidwerke für Mähdrescher.

Die DE 199 33 779 C schlägt vor, einen Erntevorsatz in der Mitte zu teilen und die äußeren Enden der Hälften um horizontale und in Fahrtrichtung verlaufende Achsen nach innen und oben zu klappen.

In der DE 38 28 293 C wird ein Erntevorsatz offenbart, bei dem die Außenteile um eine schräg nach außen und oben stehende Achse in eine Stellung geschwenkt werden, in dem sie vor und oberhalb des Mittelteils stehen. In einer anderen Ausführungsform werden die Außenteile durch einen zweiarmigen Schwenkmechanismus oberhalb des Mittelteils positioniert.

Außerdem ist in der EP 0 131 853 B ein Maispflücker beschrieben, bei dem die Einlaufspitzen ohne die Pflückaggregate um eine horizontale, quer zur Fahrtrichtung verlaufende Achse nach oben geklappt werden. Die Außenteile werden um quer zur Fahrtrichtung verlaufende Achsen hochgeschwenkt, wie in der DE 41 31 491 A beschrieben.

Die US 2 636 331 A beschreibt eine Maiserntemaschine mit sich schräg nach hinten und oben erstreckenden Endlosförderern, an deren Vorderseite haspelartige Förderer mit Leisten angebracht sind, welche das Erntegut nach hinten fördert, wo es am Einlass der Endlosförderer durch Messer abgeschnitten und durch die Endlosförderer erfasst wird. Die haspelartigen Förderer können um die Drehachsen unterer Umlenkwalzen der Endlosförderer nach oben verschwenkt werden. Es sind drei Endlosförderer mit davor positionierten haspelartigen Förderern seitlich nebeneinander starr am Rahmen der selbstfahrenden Erntemaschine angebracht.

Bei den beschriebenen Erntevorsätzen ist als nachteilig anzusehen, dass ihr Schwerpunkt beim Transport relativ weit vorn liegt. Die Lage des Schwerpunkts wird, außer bei den in der EP 0 131 853 B und der US 2 636 331 A beschriebenen Maispflückern, wobei bei ersterer die nach oben geklappten Einlaufspitzen der Pflückaggregate den Schwerpunkt im eingeklappten Zustand jedoch nur geringfügig nach hinten verlagern und in der US 2 636 331 A die Erntegutaufnahmeeinrichtungen sich aufgrund der geringen Arbeitsbreite nicht über die Breite der Erntemaschine nach außen erstrecken, so dass sie nicht in eine ihre Breite vermindernde Außerbetriebsstellung zu verbringen sind, durch das Einklappen der Erntegutaufnahmeeinrichtungen der Erntevorsätze in die Transportposition nicht verändert. Aus diesem Grund entstehen beim Straßentransport nachteilige hohe Belastungen der Vorderräder der den Erntevorsatz tragenden Erntemaschine.

Die der Erfindung zugrunde liegende Aufgabe wird darin gesehen, einen demgegenüber verbesserten Erntevorsatz bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Der Erntevorsatz ist in einen Mittelteil und zwei Seitenteile aufgeteilt, die in der Betriebsstellung bezüglich der Vorwärtsbewegungsrichtung seitlich neben dem Mittelteil angeordnet sind. Um die Breite des Erntevorsatzes in der Transportstellung zu vermindern, sind die Seitenteile am Mittelteil schwenkbar angelenkt. Die entsprechende Seitenteilschwenkachse erstreckt sich in der Vorwärtsbewegungsrichtung des Erntevorsatzes, so dass der Seitenteil oder die Seitenteile nach oben verschwenkt werden können. In der Transportstellung erstrecken sich die Seitenteile entweder etwa vertikal nach oben, so dass der Fahrer der Erntemaschine zwischen ihnen hindurch (bzw. an ihm vorbei) auf die Straße blicken kann, oder sie sind oben auf den nach hinten und oben geklappten Mittelteil gelegt, so dass der Seitenteil sich parallel zum Mittelteil erstreckt.

Die Erntegutaufnahme- und/oder Erntegutbearbeitungseinrichtungen sind um eine horizontale, quer zur Vorwärtsbewegungsrichtung verlaufende Schwenkachse zwischen der Betriebsstellung und der Transportstellung bewegbar. In der Betriebsstellung sind die Erntegutaufnahme- und/oder Erntegutbearbeitungseinrichtungen des Mittelteils und der Seitenteile in ihrer bekannten Stellung mehr oder weniger weit oberhalb des abzuerntenden Felds angeordnet. In der Transportstellung sind die Erntegutaufnahme- und/oder Erntegutbearbeitungseinrichtungen des Mittelteils und der Seitenteile nach oben und entgegen der Vorwärtsbewegungsrichtung nach hinten verschwenkt. Die Seitenteile sind bei in die Transportstellung verbrachten Erntegutaufnahme- und/oder Erntegutbearbeitungseinrichtungen des Mittelteils und der Seitenteile um ihre Seitenteilschwenkachse in ihre Transportstellung schwenkbar.

Auf diese Weise erreicht man, dass der Schwerpunkt des Erntevorsatzes in der Transportstellung deutlich näher an die den Erntevorsatz tragenden Erntemaschine rückt.

Viele Arten von Erntevorsätzen sind mit Querförderschnecken bzw. anderen Querförderern, beispielsweise Fördergurten oder Walzenförderern ausgestattet, die stromab der Erntegutaufnahme- und/oder Erntegutbearbeitungseinrichtungen an der Rückseite des Erntevorsatzes angeordnet sind. In der Regel werden diese Querförderer nicht mit den Erntegutaufnahme- und/oder Erntegutbearbeitungseinrichtungen um die Schwenkachse in eine Transportstellung verschwenkt, sondern bleiben ortsfest. Sie können starr an rückseitigen Rahmen befestigt sein, was den Vorteil hat, dass der Schwenkantrieb weniger Masse bewegen muss und deshalb kleiner dimensioniert werden kann. Bei einer bevorzugten Ausführungsform der Erfindung fällt die Schwenkachse mit der Drehachse der Querförderschnecke zusammen.

In den Zeichnungen ist ein nachfolgend näher beschriebenes Ausführungsbeispiel der Erfindung dargestellt. Es zeigt:
- Fig. 1: eine Draufsicht auf eine Erntemaschine mit einem erfindungsgemäßen Erntevorsatz in seiner Betriebsstellung,
- Fig. 2: eine Seitenansicht der Erntemaschine der Figur 1,
- Fig. 3: eine Seitenansicht der Erntemaschine mit um eine horizontale, quer zur Vorwärtsbewegungsrichtung verlaufende Achse hochgeschwenktem Erntevorsatz, und
- Fig. 4.: eine Seitenansicht der Erntemaschine mit einem in die Transportstellung verbrachten Erntevorsatz.

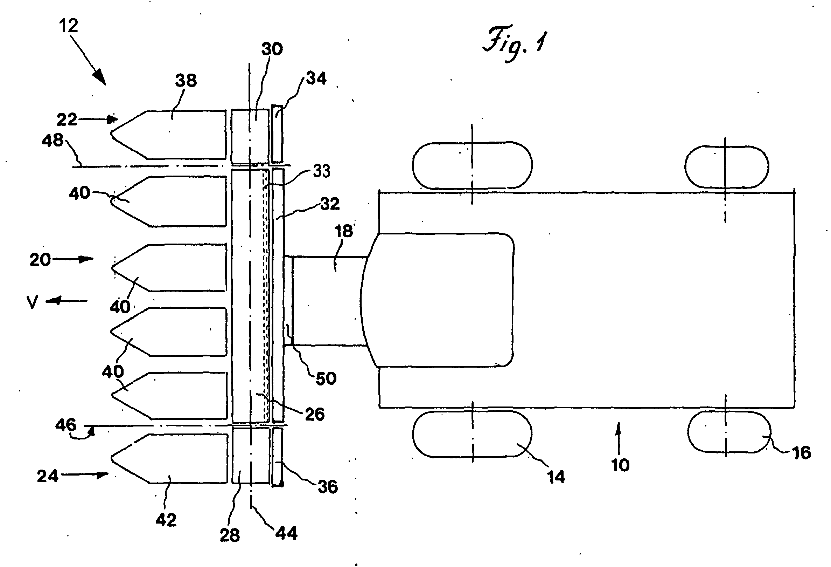

In Figur 1 ist eine selbstfahrende Erntemaschine 10 in Form eines Mähdreschers dargestellt. Sie stützt sich durch vordere, angetriebene Räder 14 und hintere, lenkbare Räder 16 auf einem Feld ab. An der Vorderseite der Erntemaschine 10 befindet sich ein Schrägförderer 18, der einen Erntevorsatz 12 in Form eines Maispflückers trägt. Die Erntemaschine 10 ist eingerichtet, den Erntevorsatz 12 in einer Vorwärtsbewegungsrichtung V über ein abzuerntendes Feld zu bewegen.

Der Erntevorsatz 12 setzt sich aus einem Mittelteil 20 und bezüglich der Vorwärtsbewegungsrichtung V auf beiden Seiten des Mittelteils 20 angeordneten Seitenteilen 22, 24 zusammen. Der Mittelteil 20 ist an einem Pendelschild 50, der an der Vorderseite des Schrägförderers 18 angebracht ist, aufgehängt. Der Mittelteil 20 weist als Erntegutaufnahme- und/oder Erntegutbearbeitungseinrichtungen 40 vier seitlich nebeneinander angeordnete Einzugs- und Pflückvorrichtungen auf, die konventionell mit Einzugsketten und Pflückwalzen ausgestattet sein könnten. Denkbar wäre auch die Verwendung von Einzugs- und Pflückvorrichtungen, wie sie in der DE 100 28 887 A beschrieben sind, deren Offenbarung durch Bezugnahme hier mit aufgenommen wird. Die Art der Erntegutaufnahme- und/oder Erntegutbearbeitungseinrichtungen 40 ist im Rahmen des erfindungsgemäßen Gedankens beliebig, so dass es sich bei ihnen auch um Baumwollpflückeinrichtungen, Trommeln von Maisgebissen oder beliebige andere Ernteeinrichtungen handeln könnte. An der Rückseite der Erntegutaufnahme- und/oder Erntegutbearbeitungseinrichtungen 40 ist eine Querförderschnecke 26 angeordnet. Der Mittelteil 20 wird durch einen ersten, am Pendelschild 50 abgestützten starren Rahmen 32 und einen zweiten, schwenkbaren Rahmen 33 getragen. Der Rahmen 32 weist an seinen (in Vorwärtsbewegungsrichtung V betrachtet) äußeren Enden Elemente (Konsolen o. ä.) auf, an denen die beiden Enden der Querförderschnecke 26 abgestützt sind. Dort ist auch der zweite, schwenkbare Rahmen 33 angelenkt, der wiederum die Erntegutaufnahme- und/oder Erntegutbearbeitungseinrichtungen 40 haltert. Der zweite Rahmen 33 mit den Erntegutaufnahme- und/oder Erntegutbearbeitungseinrichtungen 40 ist durch geeignete Schwenkmittel um die Längsachse der Querförderschnecke 26 nach oben verschwenkbar, während der erste Rahmen 32 starr am Pendelschild 50 befestigt ist. Der erste und/oder zweite Rahmen 32, 33 haltern die Querförderschnecke 26 teilweise umschließende Wannen, die im Zusammenwirken mit der Querförderschnecke eine Gutförderung in die Erntemaschine 10 ermöglichen.

Die auf beiden Seiten des Mittelteils 20 angeordneten Seitenteile 22, 24 weisen je eine Erntegutaufnahme- und/oder Erntegutbearbeitungseinrichtung 38 bzw. 42 auf, die in der Regel mit den Erntegutaufnahme- und/oder Erntegutbearbeitungseinrichtungen 40 gleichartig sind. An ihrer Rückseite ist jeweils eine Querförderschnecke 28 bzw. 30 angeordnet, die beide zur Querförderschnecke 26 koaxial verlaufen. Die Seitenteile 22, 24 stützen sich auf rückseitig angeordneten Rahmen 34, 36 ab. Die Rahmen 34 und 36 sind mit Elementen (insbesondere Konsolen) versehen, welche jeweils eines oder beide Enden der Querförderschnecken 28 und 30 drehbar abstützen. Auch sind zur Gutförderung Wannen mit dem Rahmen verbunden, die den Unter- und Rückseiten der Querförderschnecken 28 und 30 benachbart sind. Die Querförderschnecken 26, 28 und 30 sind um eine gemeinsame Achse 44 antreibbar drehbar und untereinander durch Drehmoment übertragende Kupplungen lösbar verbunden. Auch die Erntegutaufnahme- und/oder Erntegutbearbeitungseinrichtungen 38, 40, 42 sind antreibbar, wobei der Antrieb, wie auch der für die Querförderschnecken 26, 28 und 30, vom Schrägförderer 18 des Erntefahrzeugs 10 her erfolgt. In der Betriebsstellung stützen sich die Rahmen 34, 36 der Seitenteile 22, 24 am Rahmen 32 des Mittelteils 20 ab.

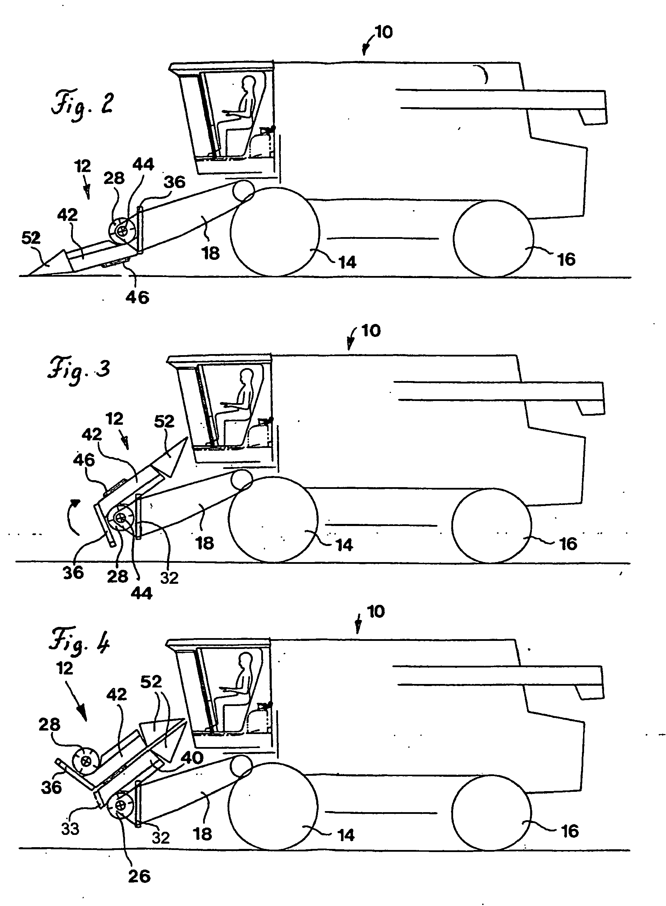

Die Erntegutaufnahme- und/oder Erntegutbearbeitungseinrichtungen 40 des Mittelteils 20 - wie bereits erwähnt - und die ganzen Seitenteile 22, 24 sind gemeinsam um eine mit der Achse 44 der Querförderschnecken 26, 28 und 30 übereinstimmende, horizontal und quer zur Vorwärtsbewegungsrichtung V verlaufende Achse zwischen einer Betriebs- und einer Transportposition verschwenkbar gelagert. Die Seitenteile 22, 24 sind zusätzlich in geeigneten Lagerungen um Seitenteilschwenkachsen 46, 48, die sich in der Vorwärtsbewegungsrichtung V und - wie in Figur 2 erkennbar - parallel zur Unterseite der Erntegutaufnahme- und/oder Erntegutbearbeitungseinrichtungen 38, 40, 42 schräg nach vorn und unten erstrecken, schwenkbar am Mittelteil 20 angelenkt. Zum Verschwenken des Mittelteils 20 und der Seitenteile 22, 24 um die Achse 44 und die Seitenteilschwenkachsen 46 und 48 sind entsprechend gesteuerte, in den Figuren aus Gründen der Übersichtlichkeit nicht gezeigte Antriebe vorgesehen, vorzugsweise Hydraulikzylinder, die von der Hydraulik der Erntemaschine 10 beaufschlagt werden. Ein Hydraulikzylinder kann den zweiten Rahmen 33 des Mittelteils 20 mit den Erntegutaufnahme- und/oder Erntegutbearbeitungseinrichtungen 40 gemeinsam mit den an den zweiten Rahmen 33 gekoppelten Seitenteilen 22, 24 um die Achse 44 drehen, während ein oder zwei weitere Hydraulikzylinder die Seitenteile 22, 24 um die Seitenteilschwenkachsen 46, 48 dreht oder drehen.

Im Betrieb bewegt die Erntemaschine 10 den Erntevorsatz 12 über das Feld. Die Erntegutaufnahme- und/oder Erntegutbearbeitungseinrichtungen 38, 40, 42 ernten jeweils sechs Reihen der auf dem Feld stehenden Maispflanzen ab und trennen die Maiskolben von den Pflanzenresten. Während letztere gehäckselt oder ganz auf dem Feld abgelegt werden, werden die Maiskolben durch die Querförderschnecken 26, 28 und 30 dem Schrägförderer 18 zugeführt, der sie ins Innere der Erntemaschine fördert, wo sie ausgedroschen werden.

In Figur 2 ist eine Seitenansicht der Erntemaschine 10 mit dem Erntevorsatz 12 wiedergegeben. Die sichtbare Erntegutaufnahme- und/oder Erntegutbearbeitungseinrichtung 42 des linken Seitenteils 24 erstreckt sich schräg von der Querförderschnecke 44 nach vorn und unten bis zu einer auf dem Erdboden aufliegenden Teilerspitze 52.

In Figur 3 ist eine Seitenansicht der Erntemaschine 10 wiedergegeben, in der der Mittelteil 20 und die Seitenteile 22, 24 mit den Erntegutaufnahme- und/oder Erntegutbearbeitungseinrichtungen 38, 40, 42 um die horizontale, quer zur Vorwärtsbewegungsrichtung V verlaufende Achse 44 im Uhrzeigersinn, wie durch den Pfeil angedeutet, nach oben verschwenkt sind. Dabei wurde der zweite Rahmen 33 des Mittelteils 20 mit den daran befestigten Erntegutaufnahme- und/oder Erntegutbearbeitungseinrichtungen 40 um die Achse 44 nach oben verschwenkt. Die Erntegutaufnahme- und/oder Erntegutbearbeitungseinrichtungen 38, 40, 42 erstrecken sich nunmehr von den Querförderschnecken 26, 28, 30 schräg nach oben und hinten. Der Massenschwerpunkt des Erntevorsatzes 12 ist dadurch wesentlich nach hinten verlagert.

In der in Figur 3 dargestellten Position ist die Breite des Erntevorsatzes 12 gegenüber der Betriebsstellung, wie sie in Figur 1 und 2 dargestellt ist, nicht verändert. Ein nur die in den Figuren 2 und 3 dargestellte Bewegung ermöglichender Erntevorsatz 12 wäre zwar denkbar, aber in der Regel nur eingeschränkt verwendbar, zum Beispiel bei geringer Breite, bei Transportfahrten auf Feldern oder auf öffentlichen Straßen in Ländern mit entsprechenden Verkehrsvorschriften. Um auch die Breite des Erntevorsatzes 12 zu vermindern, sind die Seitenteilschwenkachsen 46 und 48 vorgesehen. In Figur 3 ist der Erntevorsatz in seiner Transportposition dargestellt, in der die Seitenteile 22, 24 um die Seitenteilschwenkachsen 46 und 48 um etwa 180° nach innen geklappt sind und auf dem Mittelteil 20 aufliegen. Der Massenschwerpunkt des Erntevorsatzes 12 ist gegenüber der Figur 2 geringfügig nach vorn verlagert, liegt jedoch immer noch wesentlich weiter hinten als bei Erntevorsätzen, bei denen nur die Seitenteile um in Vorwärtsbewegungsrichtung liegende Achsen nach oben und innen geklappt sind.

## Patentansprüche

1. Erntevorsatz (12) für eine selbstfahrende Erntemaschine (10), mit mehreren Erntegutaufnahme- und/oder Erntegutbearbeitungseinrichtungen (38, 40, 42), die in einer Vorwärtsbewegungsrichtung (V) über ein Feld bewegbar sind, von denen mindestens eine an einem Mittelteil (20) des Erntevorsatzes (12) und jeweils mindestens eine an einem von zwei in der Betriebsstellung bezüglich der Vorwärtsbewegungsrichtung (V) beidseits neben dem Mittelteil (20) angeordneten Seitenteilen (22, 24) des Erntevorsatzes (12) befestigt sind, wobei die Seitenteile (22, 24) durch Verschwenken um eine sich zumindest etwa in Vorwärtsbewegungsrichtung (V) erstreckende Seitenteilschwenkachse (46, 48) zwischen einer Betriebsstellung und einer Transportstellung bewegbar sind, in der sie oberhalb des Mittelteils (20) angeordnet sind, **dadurch gekennzeichnet, dass** die Erntegutaufnahme- und/oder Erntegutbearbeitungseinrichtungen (38, 40, 42) gegenüber dem Mittelteil (20) und ihrem Seitenteil (22, 24) um eine zumindest näherungsweise horizontale und sich quer zur Vorwärtsbewegungsrichtung (V) erstreckende Schwenkachse (44) zwischen einer Betriebsstellung und einer Transportstellung bewegbar sind, und dass die Seitenteile (22, 24) bei in die Transportstellung verbrachten Erntegutaufnahme- und/oder Erntegutbearbeitungseinrichtungen (40) des Mittelteils (20) und der Seitenteile (22, 24) um ihre Seitenteilschwenkachse (46, 48) in ihre Transportstellung schwenkbar sind.

2. Erntevorsatz (12) nach Anspruch 1, **dadurch gekennzeichnet, dass** der Seitenteil (22, 24) in seiner Transportstellung zumindest näherungsweise parallel zum Mittelteil (20) angeordnet ist.

3. Erntevorsatz (12) nach einem der Ansprüche 1 oder 2, **dadurch gekennzeichnet, dass** in seinem rückwärtigen Bereich eine Querförderschnecke (26, 28, 30) angeordnet ist, und dass die Erntegutaufnahme- und/oder Erntegutbearbeitungseinrichtung (38, 40, 42) relativ zur Querförderschnecke (26, 28, 30) um die Schwenkachse (44) bewegbar ist.

4. Erntevorsatz nach Anspruch 3, **dadurch gekennzeichnet, dass** die Drehachse der Querförderschnecke (26, 28, 30) und die Schwenkachse (44) zumindest näherungsweise zusammenfallen.

5. Erntemaschine (10) mit einem Erntevorsatz nach einem der vorhergehenden Ansprüche.

## Claims

1. Harvesting header (12) for a self-propelled harvesting machine (10), with several crop gathering and/or crop processing arrangements (38, 40, 42), which can be moved over a field in a forward operating direction (V), of which at least one is fastened on a centre portion (20) of the harvesting header (12) and respectively at least one is fastened on one of two side portions (22, 24) of the harvesting header (12) arranged on both sides next to the centre portion (20) in the operative position with respect to the forward operating direction (V), wherein by pivoting around a side portion pivot axis (46, 48) extending at least approximately in the forward operating direction (V) the side portions (22, 24) are movable between an operating position and a transport position, in which they are arranged above the centre portion (20), **characterised in that** relative to the centre portion (20) and their side portion (22, 24) around an at least approximately horizontal pivot axis (44) extending transversely to the forward operating direction (V), the crop gathering and/or crop processing arrangements (38, 40, 42) are movable between an operating position and a transport position, and that when the crop gathering and/or crop processing arrangements (40) of the centre portion (12) and the side portions (22, 24) are brought into the transport position the side portions (22, 24) can be pivoted around their side portion pivot axis (46, 48) into their transport position.

2. Harvesting header (12) according to Claim 1, **characterised in that** in its transport position the side portion (22, 24) is arranged at least approximately parallel to the centre portion (20).

3. Harvesting header (12) according to one of Claims 1 or 2, **characterised in that** in its rearward region a transverse auger (26, 28, 30) is arranged, and that the crop gathering and/or crop processing arrangement (38, 40, 42) is movable relative to the transverse auger (26, 28, 30) around the pivot axis (44).

4. Harvesting header according to Claim 3, **characterised in that** the rotational axis of the transverse auger (26, 28, 30) and the pivot axis (44) at least approximately coincide.

5. Harvesting machine (10) with a harvesting header according to one of the preceding claims.

## Revendications

1. Outil de récolte frontal (12) pour une machine de récolte (10) automotrice, comportant plusieurs dispositifs de ramassage et/ou de traitement de la récolte (38, 40, 42), qui peuvent être déplacés sur un champ dans une direction d'avancement (V), parmi lesquels au moins un est fixé à une partie centrale (20) de l'outil de récolte frontal (12) et au moins un est fixé sur chacune des deux parties latérales (22, 24), agencées de part et d'autre de la partie centrale (20) de l'outil de récolte frontal (12) en position de service par rapport à la direction d'avancement (V), les parties latérales (22, 24) pouvant pivoter autour d'un axe de pivotement (46, 48), orienté au moins sensiblement dans la direction d'avancement (V), pour se déplacer entre une position de service et une position de transport, dans laquelle elles sont disposées au-dessus de la partie centrale (20), **caractérisé en ce que** les dispositifs de ramassage et/ou de traitement de la récolte (38, 40, 42) peuvent être déplacés entre une position de service et une position de transport en pivotant par rapport à la partie centrale (20) et à leur partie latérale (22, 24) autour d'un axe de pivotement (44) horizontal et orienté perpendiculairement à la direction d'avancement (V), et **en ce que** les parties latérales (22, 24) sont aptes à pivoter autour de leur axe de pivotement (46, 48) vers leur position de transport lorsque les dispositifs de ramassage et/ou de traitement de la récolte (38, 40, 42) de la partie centrale (20) et des parties latérales (22, 24) ont été amenés dans la position de transport.

2. Outil de récolte frontal (12) selon la revendication 1, **caractérisé en ce que** la partie latérale (22, 24) dans sa position de transport est disposée au moins à peu près parallèlement à la partie centrale (20).

3. Outil de récolte frontal (12) selon la revendication 1 ou 2, **caractérisé en ce qu'**une vis de transport transversale (26, 28, 30) est disposée dans sa partie arrière, et **en ce que** le dispositif de ramassage et/ou de traitement de la récolte (38, 40, 42) est apte à être déplacé par rapport à la vis de transport transversale (26, 28, 30) autour de l'axe de pivotement (44).

4. Outil de récolte frontal selon la revendication 3, **caractérisé en ce que** l'axe de rotation de la vis de transport transversale (26, 28, 30) et l'axe de pivotement (44) coïncident au moins à peu près.

5. Machine de récolte (10) comportant un outil de récolte frontal selon l'une quelconque des revendications précédentes.
